# EUROPÄISCHE PATENTSCHRIFT

(11) **EP 3 184 272 B1**
(45) Veröffentlichungstag und Bekanntmachung des Hinweises auf die Patenterteilung: **22.04.2020**
(21) Anmeldenummer: 17155311.8
(22) Anmeldetag: 06.01.2011
(51) Int. Cl.: B27N 3/18

(54) **VERFAHREN UND VORRICHTUNG ZUR GEZIELTEN BEEINFLUSSUNG DER TECHNOLOGISCHEN EIGENSCHAFTEN EINZELNER BEREICHE EINER HOLZWERKSTOFFPLATTE, EINES VORVERDICHTETEN HOLZWERKSTOFFVLIESES ODER EINES HOLZFASERKUCHENS**
METHOD AND DEVICE FOR TARGETED INFLUENCE OF THE TECHNOLOGICAL CHARACTERISTICS OF INDIVIDUAL AREAS OF A WOODEN BOARD, A PRE-COMPRESSED WOODEN FABRIC OR A WOOD FIBRE CAKE
PROCÉDÉ ET DISPOSITIF D'INFLUENCE CIBLÉE DES CARACTÉRISTIQUES TECHNOLOGIQUES DE DOMAINES INDIVIDUELS D'UNE PLAQUE EN MATIÈRE DÉRIVÉE DU BOIS, D'UN TISSU EN MATIÈRE DÉRIVÉE DU BOIS PRÉ-ÉTANCHÉIFIÉ OU D'UN GÂTEAU EN FIBRES DE BOIS

(43) Veröffentlichungstag der Anmeldung: 28.06.2017
(62) Teilanmeldung aus: 11000068.4
(73) Patentinhaber: Flooring Technologies Ltd., Kalkara SCM1001 (MT); Cefla Deutschland GmbH, 53340 Meckenheim (DE)
(72) Erfinder: KALWA, Norbert, 32805 Horn-Bad Meinberg (DE); STAHL, Gerhard, 53474 Bad Neuenahr-Ahrweiler (DE)
(74) Vertreter: Rehmann, Thorsten

(56) Entgegenhaltungen:
- EP-A1- 2 036 689
- EP-A1- 2 168 738
- EP-A1- 2 241 426
- US-A1- 2003 024 199

## Beschreibung

Die Erfindung betrifft eine Vorrichtung zur gezielten Beeinflussung der technologischen Eigenschaften einzelner Bereiche einer Holzwerkstoffplatte, eines vorverdichteten Holzwerkstoffvlieses oder eines Holzfaserkuchens.

An bestimmte Holzwerkstoffplatten werden teilweise die Anforderungen gestellt, dass sie gegenüber einer üblichen Standard-Holzwerkstoffplatte verbesserte technologische Eigenschaften aufweisen. Diese verbesserten technologischen Eigenschaften müssen vielfach nur partiell, also nur in einzelnen Bereichen der Holzwerkstoffplatte vorliegen. Es ist deshalb nicht notwendig, die gesamte Platte zu verändern, was oft aus Kostengründen nicht vertretbar oder auch im Herstellungsprozess der Platte gar nicht möglich ist. Ein Grund dafür kann sein, dass ein Mittel zur Modifikation bei der Plattenherstellung nicht eingesetzt werden kann, weil es z.B. den Herstellprozess nachhaltig beeinflusst oder stört. Bei den zu verändernden Eigenschaften kann es sich um elektrische Größen (Durchgangswiderstand), mechanische Festigkeiten (beispielsweise Querzugfestigkeit), hydrische Eigenschaften (Wasseraufnahme, Quellung) oder Emission handeln. Diese Beispiele sind beliebig in jede Anwendung bzw. jede damit verbundene Modifikation erweiterbar. Diese Eigenschaften können sich auf das gesamte Verarbeitungs- bzw. Anwendungsspektrum beziehen. Es muss sich nicht nur um physikalische, sondern kann sich auch um chemische Eigenschaften handeln, die aus welchen Gründen auch immer nach der Herstellung der Platte nicht den Wünschen des Verarbeiters oder des Anwenders entsprechen.

Diese Holzwerkstoffplatten werden großformatig aus beleimten und miteinander verpressten Holzspänen oder Holzfasern hergestellt. Diese großformatigen Holzwerkstoffplatten werden anschließend in einzelne Platten gewünschter Größe aufgeteilt. Zuvor können die Ober- und/oder Unterseite in irgendeiner Form beschichtet worden sein. Die aufgeteilten Platten können als Wand-, Decken- oder Fussbodenpaneele, als Möbelplatten oder beispielsweise als Schalungsplatten verwendet und hierzu besonders weiterbearbeitet werden. Üblicherweise ist dem Hersteller bzw. dem Verarbeiter der großformatigen Holzwerkstoffplatte bekannt, welche Formate aus einer Standardplatte im Rahmen der Weiterverarbeitung hergestellt werden. Der Grund hierfür liegt darin, dass entweder der Hersteller selbst die Veredelung betreibt oder dass ein enger Kontakt zwischen Plattenhersteller und Weiterverarbeiter besteht. Es hat sich gezeigt, dass die Modifikationen der technologischen Eigenschaften in der Regel im Randbereich von Zuschnitten oder Rohfixmaßen benötigt werden. Ein Problem ist hier allenfalls in einer benötigten Variabilität zu sehen, die für die unterschiedlichen Formate gebraucht wird. Dies lässt sich durch eine möglichst flexible Methode zur Behandlung der Holzwerkstoffplatten lösen. Wenn dies gewährleistet ist, ist der Weg für die gezielte Veränderung von Eigenschaften in diesen definierten Bereichen leicht durchzuführen.

Aus der DE 10 2008 034 749 B3 ist eine Holzwerkstoffplatte bekannt, deren Festigkeit im Randbereich gegenüber dem Innenbereich erhöht ist.

Aus der DE 10 2008 049 132 A1 ist ein Verfahren zum Herstellen einer Holzfa-Holzfaserplatte verpresst wird, anschließend eine wässrige Flüssigkeit auf Teile einer ersten Seite der Roh-Holzfaserplatte aufgebracht werden und anschließend auf der der erste Seite gegenüberliegenden zweiten Seite ein Unterdruck zumindest an Teilen der der ersten Seite gegenüberliegenden zweiten Seite angelegt wird, so dass die wässrige Flüssigkeit in und/oder durch die Roh-Holzfaserplatte gesaugt wird. Das Aufbringen der wässrigen Flüssigkeit und das Anlegen des Unterdruckes kann nach dem Pressen, insbesondere nach einem Heißpressen, erfolgen.

In der EP 2 241 426 A1 ist beschrieben, dass zur Herstellung einer Holzwerkstoffplatte der aus beleimten Holzspänen oder Holzfasern gestreute Kuchen auf einem Förderband hinter einer Vorpresse und vor der Heißpresse einem Vakuum ausgesetzt wird und gleichzeitig ein Vergütungsmedium auf den Kuchen aufgetragen wird, das sich in Folge des Vakuums im Kuchen verteilt, und dass das Vergütungsmedium beim anschließenden Verpressen in der Heißpresse vernetzt wird. Das Vakuum wird unterhalb des Kuchens angelegt und das Vergütungsmedium von oben aufgetragen.

Aus der DE 10 2007 047 315 A1, beziehungsweise der EP 2 036 689 A1 ist eine Vorrichtung zur Vergütung von Holzwerkstoffplatten bekannt, die eine Aufnahme mit einer Auflagerfläche zum Auflagern einer Holzwerkstoffplatte besitzt, und eine Saugeinrichtung zum Aufbringen eines Unterdrucks auf eine Oberfläche der Holzwerkstoffplatte aufweist, die auf der Auflagerfläche liegt. Die Saugeinrichtung umfasst mehrere Saugleisten, die zumindest abschnittsweise geradlinig verlaufen, an ihrer der Auflagerfläche zugewandten Seite Dichtungen besitzen und so ausgebildet sind, dass sie mit einer auf der Auflagerfläche aufliegenden Holzwerkstoffplatte einen evakuierbaren Saugraum bilden, der eine der Holzwerkstoffplatte zugewandte Saugfläche besitzt.

Bei den zuvor erläuterten Vorrichtungen ist man auf den maximal zur Verfügung stehenden Unterdruck beschränkt. Durch die schwierige Abdichtung des Systems ist die Effektivität zur gezielten Beeinflussung der technologischen Eigenschaften gering.

Von dieser Problemstellung ausgehend soll eine Vorrichtung angegeben werden, mit dem die technologischen Eigenschaften einzelner Bereiche einer Holzwerkstoffplatte gezielt beeinflusst werden können.

Zur Problemlösung wird eine Vorrichtung zur gezielten Beeinflussung der technologischen Eigenschaften einzelner Bereiche einer Holzwerkstoffplatte mit folgenden Merkmalen vorgeschlagen:
a) einem Arbeitstisch, auf den ein vorverdichtetes Holzwerkstoffvlies oder ein Holzfaserkuchen auflegbar und fixierbar ist,
b) einem Auftragsaggregat mit:
   i) einem Rahmen, der auf die Oberseite des Holzwerkstoffvlieses oder des Holzfaserkuchens aufpressbar ist,
   ii) einer Mehrzahl im Rahmen angeordneter Auftragsdüsen,
   iii) einem Druckerzeuger zur Erzeugung eines Überdrucks, mittels dessen das Vergütungsmedium in das Holzwerkstoffvlies oder den Holzfaserkuchen einpressbar ist,
c) einem innerhalb des Arbeitstisches angeordneten Lochblech oder Sieb zum Auffangen und Abführen von auf der Unterseite des Holzwerkstoffvlieses oder den Holzfaserkuchen austretendem Vergütungsmedium,
d) einer Druckpresse zum Verpressen des Holzwerkstoffvlieses oder des Holzfaserkuchens zu eine Holzwerkstoffplatte gewünschter Stärke.

Vorzugsweise ist auf dem Arbeitstisch eine Abstützeinrichtung angeordnet, die auf die Unterseite des Holzwerkstoffvlieses oder des Holzfaserkuchens einwirkt, wenn der Rahmen auf die Oberseite gepresst wird.

Die Abstützeinrichtung kann insbesondere vorzugsweise von dem Lochblech oder dem Sieb gebildet werden.

Vorteilhaft ist es, wenn am Arbeitstisch eine Einrichtung vorgesehen ist, die das Holzwerkstoffvlies oder den Holzfaserkuchen seitlich abstützt.

Der Druckerzeuger kann bei beiden Ausführungsformen vor den Auftragsdüsen angeordnet sein und das Vergütungsmedium mit Überdruck durch die Auftragsdüse pressen.

Es kann aber auch über den Druckerzeuger in dem auf der Oberfläche der Holzwerkstoffplatte, des Holzwerkstoffvlieses oder des Holzfaserkuchens dichtend aufliegenden Gehäuse nach der ersten Ausführungsform der Druck erhöhbar sein.

Um nahezu ein beliebiges Muster von behandelten Zonen auf der Oberfläche erzeugen zu können, ist das Auftragsaggregat vorzugsweise an einem in mindestens zwei Freiheitsgraden über den Arbeitstisch führbaren Arm angeordnet.

Mit Hilfe einer Zeichnung sollen Ausführungsbeispiele näher beschrieben werden.

Es zeigt:

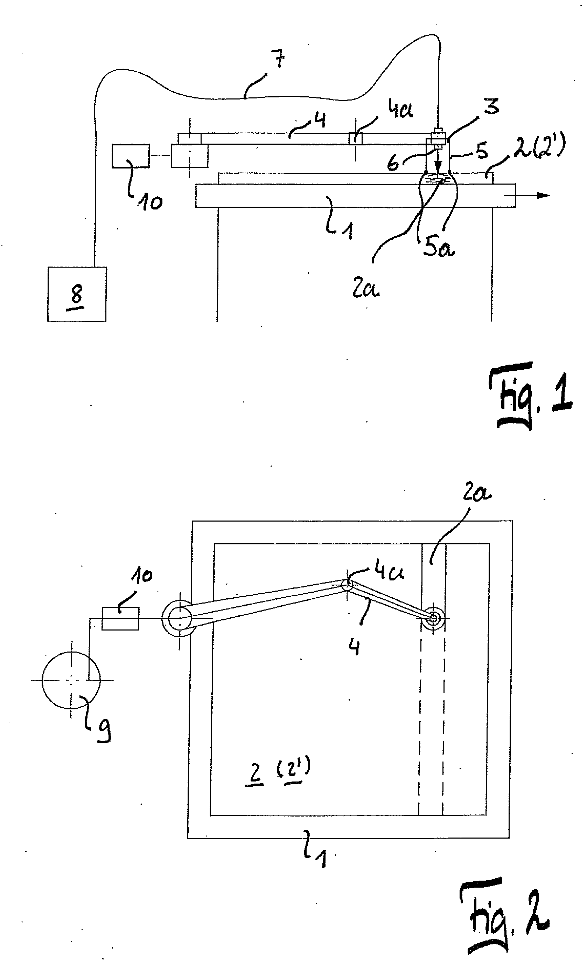

- Figur 1: - die schematische Seitenansicht einer ersten Vorrichtung zur gezielten Beeinflussung der technologischen Eigenschaften einzelner Bereiche einer Holzwerkstoffplatte;
- Figur 2: - die Draufsicht auf die Vorrichtung nach Figur 1;
- Figur 3: - die schematische Seitenansicht einer weiteren Vorrichtung zur gezielten Beeinflussung der technologischen Eigenschaften einzelner Bereiche einer Holzwerkstoffplatte;

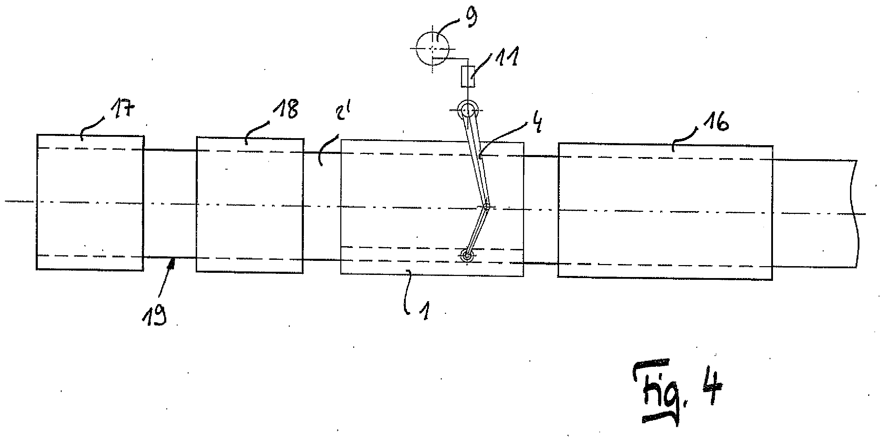

- Figur 4: - die schematische Draufsicht auf eine Anlage zur Behandlung eines Holzwerkstoffvlieses oder einer Holzwerkstoffplatte in einer ersten Ausführungsform;
- Figur 5: - die schematische Draufsicht auf eine Anlage zur Behandlung eines Holzwerkstoffvlieses oder einer Holzwerkstoffplatte in einer Ausführungsform der Erfindung.

Die Vorrichtung besteht aus dem Arbeitstisch 1, auf dem eine Holzwerkstoffplatte 2, ein vorverdichtetes Holzwerkstoffvlies 2' oder ein zumindest teilweise vorverdichteter Holzfaserkuchen 2' aufgelegt und fixiert werden kann, und dem Auftragsaggregat 3, das über einen Arm 4 in zwei Freiheitsgraden über den Arbeitstisch 1 bewegbar ist. Werden ein Holzwerkstoffvlies 2' oder ein Holzfaserkuchen 2' behandelt, umfasst die Vorrichtung weiterhin eine Hochdruckpresse 16, in der nach der Vergütung das Vlies aus mit einem Leim in bekannter Weise beleimten Spänen bzw. der Kuchen aus in bekannter Weise beleimten Fasern unter hohem Druck und hoher Temperatur zu einer Holzwerkstoffplatte 2 gewünschter Stärke verpresst werden. Bei der Hochdruckpresse 16 kann es sich um eine übliche Ein- oder Mehretagenpresse oder eine Contipresse handeln. Der Holzwerkstoff bzw. die Holzfasern werden in der Streuvorrichtung 17 zunächst auf ein endlos umlaufendes Förderband 19 mittels einer Streuvorrichtung 17 aufgestreut und dann in einer Presse 18 zu einem Vlies bzw. Kuchen 2' vorverdichtet. Aus Gründen der Vereinfachung wird in der nachfolgenden Beschreibung für das in seinen technologischen Eigenschaften zu beeinflussende Material nur noch der Begriff Holzwerkstoffplatte 2 benutzt.

Das Auftragsaggregat 3 besteht aus dem glockenförmigen Gehäuse 5 und der im Inneren des Gehäuses 5 angeordneten mindestens einen Düse 6, die über einen Schlauch 7 mit einer Förderpumpe 8 verbunden ist, die aus einem Behälter 9 Vergütungsflüssigkeit fördert. Der Arm 4 besteht aus zwei Teilen, die über ein Gelenk 4a miteinander verbunden sind. Der Arm 4 ist Teil eines hier nicht näher dargestellten computergesteuerten Roboters 10.

Am unteren Rand des Gehäuses 5 ist eine Dichtung 5a vorgesehen, die auf der Oberfläche der Holzwerkstoffplatte 2 aufliegt und im Zusammenwirken mit der Holzwerkstoffplatte 2 das Innere des Gehäuses 5 gegen die Umwelt abdichtet. Über die Förderpumpe 8 kann eine Vergütungsflüssigkeit aus dem Vorratsbehälter 9 herausgesaugt und mit Überdruck über die Düse 6 auf die Oberseite der Holzwerkstoffplatte 2 aufgesprüht werden und dringt dann in Folge des Druckes in das Innere der Holzwerkstoffplatte 2 ein. Hierzu kann ein nicht näher dargestelltes Druckaggregat vorgesehen sein, das beispielsweise auch in die Förderpumpe 8 integriert sein kann. Das Auftragsaggregat 3 wird mittels des Armes 4 in beliebigen Bahnkurven über die Holzwerkstoffplatte 2 geführt, so dass sich in Folge der in die Holzwerkstoffplatte 2 eingedrungenen Vergütungsflüssigkeit ein zumindest in seinen technologischen Eigenschaften gegenüber der übrigen Holzwerkstoffplatte 2 vergüteter Bereich 2a einstellt. Die Abdichtung des Gehäuses 5 gegenüber der Holzwerkstoffplatte 2 ist bei diesem Ausführungsbeispiel nicht zwingend notwendig, bietet aber den Vorteil, dass das Vergütungsmedium nicht aus dem Gehäuse 5 herausspritzt.

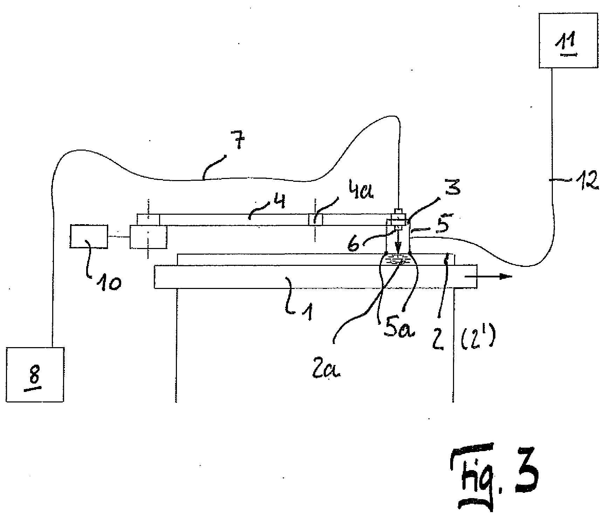

Zwingend hingegen ist die Abdichtung des Gehäuses 5 in dem in Figur 3 dargestellten Ausführungsbeispiel.

Über ein Druckaggregat 11, das über einen Schlauch 12 mit dem Inneren des Gehäuses 5 verbunden ist, kann Überdruck im Gehäuse 5 aufgebaut werden, nachdem über die Düse 6 das Vergütungsmedium auf die Oberseite der Holzwerkstoffplatte 2 aufgesprüht wurde. Durch den im Inneren des Gehäuses 5 aufgebauten Überdruck wird dann die Vergütungsflüssigkeit in das Innere der Holzwerkstoffplatte 2 gepresst. Es ist ebenso denkbar, dass der Überdruck im Gehäuse 5 aufgebaut wird, bevor über die Förderpumpe 8 Vergütungsflüssigkeit aufgesprüht wird. Der Förderdruck der Förderpumpe 8 muss dann entsprechend höher sein. Über das Druckaggregat 11 können Umgebungsluft oder anderes Gas allein oder zusammen mit einer Vergütungsflüssigkeit in die Holzwerkstoffplatte 2 gepresst werden. Über den Druck ist eine genaue Dosierung der Zubereitung, die in die Platte 2 gebracht werden soll, möglich.

Wie zuvor beschrieben, können sowohl die Oberseite als auch die Unterseite der Holzwerkstoffplatte behandelt werden. Dies kann gleichzeitig oder in Schritten erfolgen. Die Art der Behandlung (Menge pro Quadratmeter, Breite und Tiefe) wird dabei im Wesentlichen durch die Auftragsmenge des Vergütungsmediums, die Vorschubgeschwindigkeit des Auftragaggregats 3 und die Breite der Abdichtung 5a bzw. dem Innenumfang des Gehäuses 5 vorgegeben. Je nach Bedarf kann dies im Produkt oder im Prozess beliebig variiert werden. Selbstverständlich ist bei diesem Verfahren die Einsparung von Produktionsmitteln ein wesentlicher Punkt.

Die Auftragsmenge kann je nach Bedarf in einem weiten Bereich variiert werden. Dies hängt stark von der Plattendicke und der Art der gewünschten Behandlung ab (oberflächliche, partielle oder vollständige Imprägnierung). Sie kann bei wenigen Gramm beginnen und bis zu 1-2 kg/m² betragen. Ein besonderer Vorteil des Verfahrens ist, dass bei der Imprägnierung/Behandlung der Platten die Auftragsmengen in den Auftragsbahnen beliebig variiert werden können. Es können also später bei Zuschnitten oder Fertigprodukten an den verschiedenen Kanten unterschiedlich starke Ausprägungen von Eigenschaften erreicht werden. Die Erzeugung von bestimmten gewünschten Eigenschaften bei Holzwerkstoffplatten im Oberflächen- oder Randbereich hat schon immer eine große Rolle bei der Herstellung und Weiterbearbeitung von Platten gespielt. Beispiele hierfür sind die gezielte Verbesserung der Geschlossenheit der Platten für Postforming-Anwendungen, um das Problem der unruhigen Kante besser in den Griff zu kriegen, die gezielte Behandlung von Plattenkanten oder Profilen mit Mitteln zur Hydrophobierung oder die Erzeugung einer besseren Leitfähigkeit von profilierten Platten zur anschließenden Pulverlackierung.

Zur besseren Sichtbarmachung der Güte der Behandlung können dabei die verwendeten Medien eingefärbt werden. Dies ist die einfachste Möglichkeit der Kontrolle der Imprägnierung. Andere Möglichkeiten können bei Bedarf selbstverständlich gewählt werden. Beispielsweise kann die Kontrolle über Sensoren detektiert werden.

Anstelle des glockenförmigen Gehäuses 5 ist erfindungsgemäß ein vollständiger Rahmen 13 verwendet, der auf die Oberseite der Holzwerkstoffplatte 2 gepresst wird.

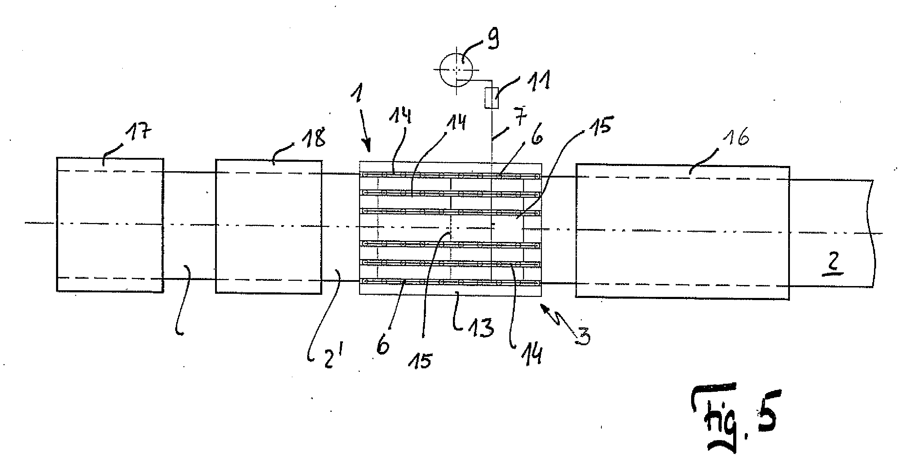

Im Rahmen 13 sind eine Mehrzahl von Auftragsdüsen 6 vorgesehen, die zu mehreren hintereinander an jeweils einer Leiste befestigt sind. Wie Figur 5 zeigt, sind mehrere Leisten 14 zueinander parallel beabstandet vorgesehen und über Verbindungsstege 15 miteinander verbunden. Vorteilhaft ist es, einen solchen Rahmen 13 als Auftragsaggregat 3 zur Behandlung eines vorverdichteten Holzwerkstoffvlieses 2' bzw. eines Holzfaserkuchens 2' zu verwenden. Hierzu ist dann vorgesehen, dass innerhalb des Arbeitstisches 1 eine Abstützeinrichtung vorgesehen ist, die auf die Unterseite des Holzwerkstoffvlieses 2' oder des Holzfaserkuchens 2' einwirkt, wenn der Rahmen 13 auf die Oberseite aufgepresst wird.

Um das an der Unterseite des Holzwerkstoffvlieses 2' oder des Holzfaserkuchens 2' austretende Vergütungsmedium auffangen und abführen zu können, ist innerhalb des Arbeitstisches 1 ein Lochblech oder Sieb angeordnet. Dieses Lochblech oder Sieb kann auch als Abstützeinrichtung dienen. Vorteilhaft ist es, wenn auch seitlich eine Einrichtung zum Abstützen des Holzwerkstoffvlieses 2' oder des Holzfaserkuchens 2' am Arbeitstisch 1 vorgesehen ist. Ein Rahmen 13 mit einer Vielzahl von Düsen 6 hat gegenüber einem Gehäuse 5 den Vorteil, dass schnell in einem einzigen Arbeitsgang eine Vielzahl unterschiedlicher Bereiche vergütet werden können. Um entsprechend flexibel zu sein, ist die Anzahl der Auftragsdüsen 6 entsprechend hoch zu wählen. Die Auswahl der zu vergütenden Bereiche wird dann dadurch getroffen, dass nur einzelne Auftragsdüsen 6 aktiviert werden.

### Bezugszeichenliste

- 1: Arbeitstisch
- 2: Holzwerkstoffplatte
- 2': Holzwerkstoffvlies, Holzfaserkuchen
- 2a: vergüteter Bereich
- 3: Auftragsaggregat

- 4: Arm
- 4a: Gelenk
- 5: Gehäuse
- 6: Auftragsdüse
- 7: Schlauch

- 8: Förderpumpe
- 9: Vorratsbehälter
- 10: computergesteuerter Roboter
- 11: Druckerzeuger
- 12: Schlauch

- 13: Rahmen
- 14: Leiste
- 15: Verbindungsstege
- 16: Druckpresse
- 17: Streuvorrichtung

- 18: Presse
- 19: Zuführleitung

## Patentansprüche

1. Vorrichtung zur gezielten Beeinflussung der technologischen Eigenschaften einzelner Bereiche einer Holzwerkstoffplatte (2) mit folgenden Merkmalen:
a) einem Arbeitstisch (1), auf den ein vorverdichtetes Holzwerkstoffvlies (2') oder ein Holzfaserkuchen (2') auflegbar und fixierbar ist,
b) einem gezielt bewegbaren Auftragsaggregat (3) mit:
i) einem Rahmen (13), der auf die Oberseite des Holzwerkstoffvlieses (2') oder des Holzfaserkuchens (2') aufpressbar ist,
ii) einer Mehrzahl im Rahmen (13) angeordneter Auftragsdüsen (6),
iii) einem Druckerzeuger (11) zur Erzeugung eines Überdrucks, mittels dessen das Vergütungsmedium in das Holzwerkstoffvlies (2') oder den Holzfaserkuchen (2') einpressbar ist,
c) einem innerhalb des Arbeitstisches (1) angeordneten Lochblech oder Sieb zum Auffangen und Abführen von auf der Unterseite des Holzwerkstoffvlieses (2') oder des Holzfaserkuchens (2') austretendem Vergütungsmedium,
d) einer Druckpresse (16) zum Verpressen des Holzwerkstoffvlieses (2') oder des Holzfaserkuchens (2') zu eine Holzwerkstoffplatte (2) gewünschter Stärke.

2. Vorrichtung nach Anspruch 1, **dadurch gekennzeichnet, dass** der Druckerzeuger (11) vor der Auftragsdüse (6) angeordnet ist und das Vergütungsmedium mit Überdruck durch die Auftragsdüse (6) strömt.

3. Vorrichtung nach Anspruch 1 oder 2, **dadurch gekennzeichnet, dass** über den Druckerzeuger (11) in dem auf der Holzwerkstoffplatte (2), des Holzwerkstoffvlieses (2') oder des Holzfaserkuchens (2') dichtend aufliegenden Gehäuse (5) der Druck erhöhbar ist.

4. Vorrichtung nach Anspruch 1, **gekennzeichnet durch** einer auf dem Arbeitstisch (1) angeordneten Abstützeinrichtung, die auf die Unterseite des Holzwerkstoffvlieses (2') oder des Holzfaserkuchens (2') einwirkt, wenn der Rahmen (13) auf die Oberseite aufgepresst wird.

5. Vorrichtung nach Anspruch 4, **dadurch gekennzeichnet, dass** die Abstützeinrichtung von dem Lochblech oder dem Sieb gebildet wird.

6. Vorrichtung nach Anspruch 1, **dadurch gekennzeichnet, dass** am Arbeitstisch (1) eine Einrichtung zum seitlichen Abstützen des Holzwerkstoffvlieses (2') oder des Holzfaserkuchens (2') vorgesehen ist.

7. Vorrichtung nach Anspruch 1, **dadurch gekennzeichnet, dass** die Mehrzahl von Auftragsdüsen (6) an einer Mehrzahl von zueinander parallel beabstandeter Leisten (14) vorgesehen ist, die im Rahmen (13) angeordnet sind.

8. Vorrichtung nach Anspruch 7, **dadurch gekennzeichnet, dass** die Leisten (14) über Verbindungsstege (15) miteinander verbunden sind.

## Claims

1. Apparatus for influencing the technological properties of individual regions of a wood-based board (2) in a targeted manner, having the following features:
a) a work table (1), on which a pre-compacted wood-based nonwoven (2') or a wood-fibre cake (2') is able to be placed and fixed,
b) an application unit (3) that is movable in a targeted manner, having:
i) a frame (13), which is able to be pressed onto the top side of the wood-based nonwoven (2') or of the wood-fibre cake (2'),
ii) a plurality of application nozzles (6) arranged in the frame (13),
iii) a pressure generator (11) for generating a positive pressure, by means of which the treatment medium is able to be pressed into the wood-based nonwoven (2') or the wood-fibre cake (2'),
c) a perforated plate or screen, arranged within the work table (1), for collecting and discharging treatment medium that emerges on the underside of the wood-based nonwoven (2') or of the wood-fibre cake (2'),
d) a compression press (16) for compressing the wood-based nonwoven (2') or the wood-fibre cake (2') into a wood-based board (2) of desired thickness.

2. Apparatus according to Claim 1, **characterized in that** the pressure generator (11) is arranged upstream of the application nozzle (6), and the treatment medium flows through the application nozzle (6) under positive pressure.

3. Apparatus according to Claim 1 or 2, **characterized in that**, via the pressure generator (11), the pressure in the housing (5) that rests on the wood-based board (2), the wood-based nonwoven (2') or the wood-fibre cake (2') in a sealing manner is able to be increased.

4. Apparatus according to Claim 1, **characterized by** a supporting device arranged on the work table (1), said supporting device acting on the underside of the wood-based nonwoven (2') or of the wood-fibre cake (2') when the frame (13) is pressed onto the top side.

5. Apparatus according to Claim 4, **characterized in that** the supporting device is formed by the perforated plate or the screen.

6. Apparatus according to Claim 1, **characterized in that** a device for laterally supporting the wood-based nonwoven (2') or the wood-fibre cake (2') is provided on the work table (1).

7. Apparatus according to Claim 1, **characterized in that** the plurality of application nozzles (6) are provided on a plurality of strips (14) that are spaced apart from one another in a mutually parallel manner and are arranged in the frame (13).

8. Apparatus according to Claim 7, **characterized in that** the strips (14) are connected together via connecting webs (15).

## Revendications

1. Dispositif pour influencer de manière ciblée les caractéristiques technologiques de zones individuelles d'un panneau en matériau à base de bois (2), comprenant les éléments suivants :
a) une table de travail (1) sur laquelle peut être posé et fixé un voile en matériau à base de bois (2') pré-comprimé ou un gâteau de fibres de bois (2'),
b) une unité d'application (3) mobile de façon ciblée, comportant :
i) un cadre (13) qui peut être pressé sur la face supérieure du voile en matériau à base de bois (2') ou du gâteau de fibres de bois (2'),
ii) une pluralité de buses d'application (6) disposées dans le cadre (13),
iii) un générateur de pression (11) pour générer une surpression, au moyen de laquelle l'agent de traitement peut être pressé dans le voile en matériau à base de bois (2') ou dans le gâteau de fibres de bois (2'),
c) une tôle perforée ou un tamis disposé à l'intérieur de la table de travail (1) pour collecter et évacuer l'agent de traitement qui s'échappe sur la face inférieure du voile en matériau à base de bois (2') ou du gâteau de fibres de bois (2'),
d) une presse (16) pour presser le voile en matériau à base de bois (2') ou le gâteau de fibres de bois (2') pour donner un panneau en matériau à base de bois (2) ayant une épaisseur souhaitée.

2. Dispositif selon la revendication 1,
**caractérisé en ce que**
le générateur de pression (11) est situé en avant de la buse d'application (6) et l'agent de traitement s'écoule avec surpression à travers la buse d'application (6).

3. Dispositif selon la revendication 1 ou 2,
**caractérisé en ce que**
la pression peut être augmentée à l'aide du générateur de pression (11) dans le boîtier (5) qui repose de manière étanche sur le panneau en matériau à base de bois (2), sur le voile en matériau à base de bois (2') ou sur le gâteau de fibres de bois (2').

4. Dispositif selon la revendication 1,
**caractérisé par**
un moyen de soutien disposé sur la table de travail (1), qui agit sur la face inférieure du voile en matériau à base en bois (2') ou du gâteau de fibres de bois (2') lorsque le cadre (13) est pressé sur la face supérieure.

5. Dispositif selon la revendication 4,
**caractérisé en ce que**
le dispositif de soutien est formé par la tôle perforée ou par le tamis.

6. Dispositif selon la revendication 1,
**caractérisé en ce que**
un moyen de soutien latéral du voile en matériau à base de bois (2') ou du gâteau de fibres de bois (2') est prévu sur la table de travail (1).

7. Dispositif selon la revendication 1,
**caractérisé en ce que**
la pluralité de buses d'application (6) sont prévues sur une pluralité de lattes (14) espacées parallèlement les unes des autres qui sont disposées dans le cadre (13).

8. Dispositif selon la revendication 7,
**caractérisé en ce que**
les lattes (14) sont reliées entre elles par des baguettes de liaison (15).
